# EUROPEAN PATENT APPLICATION

(11) **EP 4 667 231 A1**
(43) Date of publication of application: **24.12.2025**
(21) Application number: 24756520.3
(22) Date of filing: 11.01.2024
(51) Int. Cl.: B41M 5/00, B41J 2/01, C09D 11/54, C09D 11/322

(54) **PRETREATMENT LIQUID FOR INKJET INK, INK SET, IMAGE RECORDING METHOD, LAMINATE MANUFACTURING METHOD, IMAGE RECORDED MATTER, AND LAMINATE**

(30) Priority: 16.02.2023 JP 2023022852
(71) Applicant: FUJIFILM Corporation, Tokyo 106-8620 (JP)
(72) Inventor: SATO, Ayato, Ashigarakami-gun, Kanagawa 258-8577 (JP); KARIYA, Toshihiro, Ashigarakami-gun, Kanagawa 258-8577 (JP); IKOSHI, Masao, Ashigarakami-gun, Kanagawa 258-8577 (JP)
(74) Representative: Klunker IP Patentanwälte PartG mbB
(86) International application number: PCT/JP2024/000495
(87) International publication number: WO 2024/171668

(57) **Abstract**

There are provided a pretreatment liquid for an ink jet ink, containing water, an aggregating agent, a nonionic urethane resin, and a crosslinking agent, and applications thereof.

## Description

### BACKGROUND OF THE INVENTION

### 1. Field of the Invention

The present disclosure relates to a pretreatment liquid for an ink jet ink, an ink set, an image recording method, a method of producing a laminate, an image recorded material, and a laminate.

### 2. Description of the Related Art

In recent years, various studies have been conducted on a pretreatment liquid for ink jet recording on a non-absorbent base material.

For example, JP2019-177510A discloses a pretreatment liquid for ink jet recording which is excellent in image-fixing properties on a non-absorbent base material, storage stability, and lamination strength, and enables high-quality printing, the pretreatment liquid containing water-insoluble resin fine particles, an aggregating agent, a crosslinking agent, and water, in which the water-insoluble resin fine particles contain composite resin particles where a polyolefin-based resin is contained in a polyurethane-based resin.

### SUMMARY OF THE INVENTION

A laminate is produced by applying a pretreatment liquid for an ink jet ink and an ink jet ink in this order onto an impermeable base material to record an image so that an image recorded material is obtained and laminating a base material for lamination on the image in the obtained image recorded material. This laminate is required to have boiling resistance (that is, resistance to a boiling treatment) in some cases.

An object to be achieved by an embodiment of the present disclosure is to provide a pretreatment liquid for an ink jet ink, which is capable of improving the boiling resistance of a laminate in a case where a laminate is produced by applying a pretreatment liquid for an ink jet ink and an ink jet ink in this order onto an impermeable base material to record an image so that an image recorded material is obtained and laminating a base material for lamination on the image in the obtained image recorded material.

An object to be achieved by another embodiment of the present disclosure is to provide an ink set including the pretreatment liquid, and an image recording method, a method of producing a laminate, an image recorded material, and a laminate, using the pretreatment liquid for an ink jet ink.

The present disclosure includes the following aspects.
<1> A pretreatment liquid for an ink jet ink, comprising:
   water;
   an aggregating agent;
   a nonionic urethane resin; and
   a crosslinking agent.
<2> The pretreatment liquid for an ink jet ink according to <1>,
   in which the crosslinking agent includes a compound having at least one of a carbodiimide group or an oxazoline group.
<3> The pretreatment liquid for an ink jet ink according to <1> or <2>,
   in which a content of the crosslinking agent with respect to a total amount of the nonionic urethane resin is 2.0% by mass to 50% by mass.
<4> The pretreatment liquid for an ink jet ink according to any one of <1> to <3>,
   in which a content of the crosslinking agent with respect to a total amount of the pretreatment liquid for an ink jet ink is 0.10% by mass to 5.00% by mass.
<5> An ink set comprising:
   the pretreatment liquid for an ink jet ink according to any one of <1> to <4>; and
   an ink jet ink containing water, a pigment, and a resin having a carboxy group.
<6> The ink set according to <5>,
   in which the resin having a carboxy group contained in the ink jet ink includes a urethane resin having a carboxy group.
<7> The ink set according to <5> or <6>,
   in which the ink jet ink is a white ink containing a white pigment.
<8> An image recording method comprising:
   a step of applying the pretreatment liquid for an ink jet ink according to any one of <1> to <4> onto an impermeable base material; and
   a step of applying an ink jet ink containing water, a pigment, and a resin having a carboxy group onto a region of the impermeable base material onto which the pretreatment liquid for an ink jet ink is applied, by an ink jet method.
<9> The image recording method according to <8>,
   in which the resin having a carboxy group contained in the ink jet ink includes a urethane resin having a carboxy group.
<10> The image recording method according to 8 or 9,
   in which the ink jet ink is a white ink containing a white pigment.
<11> The image recording method according to any one of <8> to <10>,
   in which an application amount of the crosslinking agent in the pretreatment liquid for an ink jet ink, which is applied onto the impermeable base material, is 1.0% by mass to 30% by mass with respect to an application amount of the resin having a carboxy group in the ink jet ink, which is applied onto the impermeable base material.
<12> A method of producing a laminate, comprising:
   a step of obtaining an image recorded material that includes the impermeable base material and an image disposed on the impermeable base material by the image recording method according to any one of <8> to <11>; and
   a step of laminating a base material for lamination on a side of the image recorded material on which the image is disposed, to obtain a laminate.
<13> An image recorded material comprising:
   an impermeable base material; and
   an image disposed on the impermeable base material,
   in which the image includes
      a pretreatment layer disposed on the impermeable base material and containing an aggregating agent, a nonionic urethane resin, and a crosslinking agent, and
      an ink layer disposed on the pretreatment layer and containing a pigment and a resin having a carboxy group.
<14> A laminate comprising:
   the image recorded material according to <13>; and
   a base material for lamination laminated on the image of the image recorded material.

According to an embodiment of the present disclosure, it is possible to provide a pretreatment liquid for an ink jet ink, which is capable of improving the boiling resistance of a laminate in a case where a laminate is produced by applying a pretreatment liquid for an ink jet ink and an ink jet ink in this order onto an impermeable base material to record an image so that an image recorded material is obtained and laminating a base material for lamination on the image in the obtained image recorded material.

According to another embodiment of the present disclosure, there are provided an ink set including the pretreatment liquid, and an image recording method, a method of producing a laminate, an image recorded material, and a laminate, using the pretreatment liquid for an ink jet ink.

### DESCRIPTION OF THE PREFERRED EMBODIMENTS

Hereinafter, an ink jet ink set for an impermeable base material, an image recording method, a method of producing a laminate, an image recorded material, and a laminate according to the present disclosure will be described in detail.

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step can not clearly be distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, the concept of "(meth)acrylate" includes both acrylate and methacrylate. In addition, the concept "(meth)acryl" includes both acryl and methacryl.

In the present specification, the term "boiling treatment" denotes a treatment of immersing an object (specifically, a laminate) in water at 60°C to 100°C and heating the object for a certain time (for example, 10 minutes to 120 minutes).

### [Pretreatment liquid for ink jet ink]

The pretreatment liquid for an ink jet ink of the present disclosure (hereinafter, also simply referred to as a "pretreatment liquid") contains water, an aggregating agent, a nonionic urethane resin, and a crosslinking agent.

According to the pretreatment liquid of the present disclosure, the boiling resistance of a laminate in a case where a laminate is produced by applying the pretreatment liquid and the ink jet ink (hereinafter, also simply referred to as "ink") in this order onto an impermeable base material to record an image so that an image recorded material is obtained and laminating a base material for lamination on the image in the obtained image recorded material can be improved.

The reason why the effect of improving the boiling resistance of the above-described laminate is obtained is considered to be that, in a case where an image is recorded by applying the pretreatment liquid and the ink in this order onto the impermeable base material, the components (for example, a resin having a carboxy group) in the ink are crosslinked by the crosslinking agent in the pretreatment liquid, and the pretreatment liquid contains a nonionic urethane resin, so that a hydrophobic image is obtained. That is, it is considered that the water absorption of the laminate during the boiling treatment is suppressed (that is, the boiling resistance of the laminate is improved) by including the hydrophobic image in the laminate.

It is considered that the effect of the boiling resistance also contributes to the flexibility (that is, the followability to the deformation of the impermeable base material) of the image in the laminate. The reason why the image has excellent flexibility (that is, excellent followability to deformation of the impermeable base material) is considered to be that the urethane resin is contained in the pretreatment liquid.

As described above, it is considered that the nonionic urethane resin in the pretreatment liquid improves the hydrophobicity of the image because the nonionic property is provided, and improves the flexibility of the image because the resin is the urethane resin, and as a result, the effect of improving the boiling resistance of the laminate is obtained.

Hereinafter, each component that may be contained in the pretreatment liquid will be described.

### <Water>

The pretreatment liquid of the present disclosure contains water.

The content of water is preferably 50% by mass or greater and more preferably 60% by mass or greater with respect to the total amount of the pretreatment liquid.

The upper limit of the content of water depends on the amount of other components, but is preferably 90% by mass or less and more preferably 80% by mass or less with respect to the total amount of the pretreatment liquid.

### <Aggregating agent>

The pretreatment liquid of the present disclosure contains at least one aggregating agent.

The aggregating agent in the pretreatment liquid contributes to improving the image quality by aggregating the components in the ink jet ink in a case where the pretreatment liquid and the ink jet ink are applied in this order onto the impermeable base material to record an image.

As the aggregating agent, for example, the aggregating agents described in paragraphs 0122 to 0130 of WO2020/195360A can be used.

### -Organic acid-

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

### -Polyvalent metal compound-

Examples of the polyvalent metal compound include a polyvalent metal salt.

Examples of the polyvalent metal salt include an organic acid polyvalent metal salt and an inorganic acid polyvalent metal salt.

A polyvalent metal salt of the organic acid (for example, formic acid, acetic acid, or benzoic acid) described above is preferable as the organic acid polyvalent metal salt.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of a group 2 (such as magnesium and calcium) in the periodic table, salts of transition metals of a group 3 (such as lanthanum) in the periodic table, salts of metals of a group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

Further, it is preferable that at least a part of the polyvalent metal compound is dissociated into polyvalent metal ions and counterions in the pretreatment liquid.

### -Metal complex-

The metal complex may contain at least one selected from the group consisting of zirconium, aluminum, and titanium as a metal element.

The metal complex is, for example, a metal complex including at least one selected from the group consisting of acetate, acetylacetonate, methylacetoacetate, ethylacetoacetate, octylene glycolate, butoxyacetylacetonate, lactate, a lactate ammonium salt, and triethanol aminate as a ligand.

The metal complex may be a commercially available product. Further, various organic ligands, particularly various multidentate ligands that may form metal chelate catalysts are commercially available. Accordingly, the metal complex may be a metal complex prepared by combining a commercially available organic ligand with a metal.

The content of the aggregating agent in the pretreatment liquid is preferably in a range of 0.1% by mass to 40% by mass, more preferably in a range of 0.1% by mass to 30% by mass, still more preferably in a range of 1% by mass to 20% by mass, and even still more preferably in a range of 1% by mass to 10% by mass with respect to the total amount of the pretreatment liquid.

From the viewpoint of further improving the boiling resistance of the laminate, it is preferable that the aggregating agent includes at least one selected from the group consisting of an organic acid and an organic acid polyvalent metal salt as a polyvalent metal compound.

In this case, the proportion of the total amount of the organic acid and the organic acid polyvalent metal salt in the total amount of the aggregating agent is preferably in a range of 50% by mass to 100% by mass, more preferably in a range of 60% by mass to 100% by mass, and still more preferably in a range of 80% by mass to 100% by mass.

From the viewpoint of further improving the boiling resistance of the laminate, it is more preferable that the aggregating agent includes an organic acid.

In this case, the content of the organic acid in the total amount of the aggregating agent is preferably in a range of 50% by mass to 100% by mass, more preferably in a range of 60% by mass to 100% by mass, and still more preferably in a range of 80% by mass to 100% by mass.

### <Nonionic urethane resin>

The pretreatment liquid of the present disclosure contains at least one nonionic urethane resin.

As described above, the nonionic urethane resin contributes to the improvement of the boiling resistance of the laminate.

Specifically, as described above, the nonionic urethane resin improves the hydrophobicity of the image due to being nonionic (that is, not having ionic properties), and improves the flexibility of the obtained image (that is, the followability to the deformation of the impermeable base material) due to being a urethane resin. As a result, the hydrophobicity and flexibility of the image are improved, and thus the boiling resistance of the laminate is improved.

In the present disclosure, the nonionic urethane resin means a urethane resin having no ionic property (that is, no anionic property or cationic property).

In the present disclosure, the urethane resin denotes a polymer having a urethane bond.

The urethane resin is synthesized, for example, by reacting a diol compound with a diisocyanate compound.

For details of the diol compound and the diisocyanate compound, for example, the description in paragraphs 0031 to 0036 of JP2001-247787A can be referred to.

Among the examples, a polyester-based urethane resin having an ester bond in the main chain, a polycarbonate-based urethane resin having a carbonate bond in the main chain, or a polyether-based urethane resin having an ether bond in the main chain is preferable as the nonionic urethane resin.

The nonionic urethane resin may be a water-soluble urethane resin that is dissolved in water or in the form of urethane resin particles that are present by being dispersed in water.

Among these, from the viewpoint of increasing the strength of the layer (hereinafter, also referred to as a pretreatment layer) obtained by the application of the pretreatment liquid, the nonionic urethane resin is preferably urethane resin particles.

In a case where the nonionic urethane resin is in the form of urethane resin particles, from the viewpoint of storage stability of the pretreatment liquid, the average particle diameter of the nonionic urethane resin is preferably 1 nm to 200 nm, more preferably 3 nm to 200 nm, and still more preferably 50 nm to 150 nm. Further, the average particle diameter thereof is determined by measuring the volume average particle diameter using a particle size distribution measuring device, for example, "NANOTRAC UPA-EX150" (product name, manufactured by Nikkiso Co., Ltd.) by a dynamic light scattering method.

The weight-average molecular weight of the nonionic urethane resin is not particularly limited, but is preferably in a range of 1000 to 300000, more preferably in a range of 2000 to 200000, and still more preferably in a range of 10000 to 150000.

In the present disclosure, the weight-average molecular weight (Mw) is measured by gel permeation chromatography (GPC). The measurement according to GPC is performed by connecting three columns of TSKgeL Super HZM-H, TSKgeL Super HZ4000, and TSKgel Super HZ2000 (all product names, manufactured by Tosoh Corporation) in series using HLC-8220GPC (manufactured by Tosoh Corporation) and tetrahydrofuran (THF) as an eluent. Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

From the viewpoint of further improving the boiling resistance of the laminate, the glass transition temperature of the nonionic urethane resin is preferably -55°C to 50°C, more preferably -55°C to 20°C, and still more preferably -55°C to 0°C.

In the present disclosure, the glass transition temperature is measured using a differential scanning calorimeter, for example, "DSC-60" (product name, manufactured by Shimadzu Corporation).

From the viewpoint of further improving the boiling resistance of the laminate, the nonionic urethane resin preferably has a breaking elongation of 300% to 1300%, and more preferably 600% to 1300%. In a case where the breaking elongation of the nonionic urethane resin is 300% to 1300%, the internal stress generated by the boiling treatment can be reduced, and the boiling resistance of the laminate is further improved.

In the present disclosure, the breaking elongation is measured by the following method.

An aqueous solution or an aqueous dispersion liquid of a nonionic urethane resin is added to a container made of TEFLON (registered trademark) with a bottom area of 50 mm × 100 mm and a height of 30 mm, dried at 25°C for 24 hours, and further dried at 80°C for 6 hours, thereby obtaining a resin film with a thickness of 500 µm. A sample with a size of 10 mm × 50 mm is cut out from the resin film and subjected to a tensile test using a precision universal testing machine (product name, "AUTOGRAPH AG-IS", manufactured by Shimadzu Corporation), and the breaking elongation is measured in conformity with JIS K 6251:2017.

The nonionic urethane resin may be a commercially available product. Examples of the commercially available product include SUPERFLEX series manufactured by DKS Co., Ltd. and PUE series manufactured by Murayama Chemical Research Laboratory Co., Ltd.

The content of the nonionic urethane resin is preferably 1% by mass to 25% by mass, more preferably 5% by mass to 20% by mass, and still more preferably 5% by mass to 15% by mass with respect to the total amount of the pretreatment liquid.

The pretreatment liquid may contain a resin other than the nonionic urethane resin.

The proportion of the nonionic urethane resin in the total amount of the resin component (that is, the nonionic urethane resin and the resin other than the nonionic urethane resin) in the pretreatment liquid is preferably 50% by mass to 100% by mass, more preferably 80% by mass to 100% by mass, and still more preferably 90% by mass to 100% by mass.

### <Crosslinking agent>

The pretreatment liquid of the present disclosure contains at least one crosslinking agent.

In the present disclosure, the crosslinking agent means a compound having at least one crosslinking group.

Examples of the crosslinking group in the crosslinking agent include a carbodiimide group, an oxazoline group, an aziridine group (also known as an ethyleneimino group), an epoxy group, an isocyanate group, an aldehyde group, an N-methylol group, an acryloyl group, a vinylsulfon group, an active halogen group, a glyoxal group, and a group having a melamine structure.

The crosslinking agent preferably includes a compound having at least one of a carbodiimide group or an oxazoline group.

In this manner, the boiling resistance of the laminate can be further improved.

Specific examples of the crosslinking agent which is a compound having a carbodiimide group include carbodiimide, N,N'-dimethylcarbodiimide, N-ethyl, N'-isopropylcarbodiimide, N,N'-diisopropylcarbodiimide, N,N'-dicyclohexylcarbodiimide, N,N'-diphenylcarbodiimide, N,N'-diacetylcarbodiimide, N,N'-bis(2-propen)-carbodiimide, N,N'-dipyrrolidylcarbodiimide, N,N'-diethoxycarbodiimide, bis(trimethylsilyl)carbodiimide, 1-cyclohexyl-3-(2-morpholinoethyl)carbodiimide meso-paratoluene sulfonate, 1-ethyl-3-(3-dimethylaminopropyl)carbodiimide hydrochloride, and calcium cyanamide.

As the compound having a carbodiimide group, a commercially available product can also be used.

Examples of a commercially available product of the compound having a carbodiimide group include CarbodiLite V-02, CarbodiLite SV-02, CarbodiLite V-02-L2, CarbodiLite V-04, CarbodiLite V-06, CarbodiLite E-01, CarbodiLite E-02, CarbodiLite E-03A, and CarbodiLite SW-12G, manufactured by Nisshinbo Chemical Inc.

Examples of the crosslinking agent which is a compound having an oxazoline group include 2-oxazoline, 2-methyl-2-oxazoline, 2-ethyl-2-oxazoline, 2-(n-propyl)-2-oxazoline, 2-(isopropyl)-2-oxazoline, 2-cyclohexyl-2-oxazoline, 2-phenyl-2-oxazoline, 2-pyrrolidyl-2-oxazoline, 2-acetyl-2-oxazoline, 2-(2-propen)-2-oxazoline, 4,5-dimethyl-2-oxazoline, 2,4,4-trimethyl-2-oxazoline, 5-phenyl-2-(2-propynylamino)-2-oxazoline-4-one, and 4-ethoxymethylene-2-phenyl-2-oxazoline-5-one.

As the compound having an oxazoline group, a commercially available product can also be used.

Examples of a commercially available product of the compound having an oxazoline group include EPOCROS series K-1010E, K-2010E, K-1020E, K-2020E, K-1030E, K-2030E, WS-300, WS-500, WS-700, and RPS-1005, manufactured by Nippon Shokubai Co., Ltd.

Examples of the crosslinking agent which is a compound having an epoxy group include ethylene glycol diglycidyl ether, polyethylene glycol diglycidyl ether, 1,6-hexanediol diglycidyl ether, diethylene glycol diglycidyl ether, dipropylene glycol diglycidyl ether, polypropylene glycol diglycidyl ether, and trimethylolpropane triglycidyl ether.

As the compound having an epoxy group, a commercially available product can also be used.

Examples of a commercially available product of the compound having an epoxy group include Denacol EX-321, Denacol EX-821, Denacol EX-830, Denacol EX-850, and Denacol EX-851, manufactured by Nagase ChemteX Corporation.

Examples of the crosslinking agent which is a compound having an aziridine group (also known as an ethyleneimino group) include CHEMITITE PZ-33 and CHEMITITE DZ-22E, manufactured by Nippon Shokubai Co., Ltd.

The content of the crosslinking agent with respect to the total amount of the nonionic urethane resin is preferably 1.0% by mass to 80% by mass, more preferably 2.0% by mass to 60% by mass, still more preferably 2.0% by mass to 50% by mass, and even still more preferably 2.5% by mass to 50% by mass.

In a case where the content of the crosslinking agent with respect to the total amount of the nonionic urethane resin is 1.0% by mass or more, the boiling resistance of the laminate is further improved. The reason is considered to be that the action of the crosslinking agent is more effectively exhibited.

The boiling resistance of the laminate is further improved even in a case where the content of the crosslinking agent with respect to the total amount of the nonionic urethane resin is 80 mass% or less. The reason is considered to be that the flexibility of the obtained image (that is, the followability to the impermeable base material) is further improved.

In a case where the content of the crosslinking agent with respect to the total amount of the nonionic urethane resin is 80% by mass or less, the storage stability of the pretreatment liquid is also further improved.

The content of the crosslinking agent with respect to the total amount of the pretreatment liquid is preferably 0.10% by mass to 10.00% by mass, more preferably 0.10% by mass to 8.00% by mass, still more preferably 0.10% by mass to 5.00% by mass, even still more preferably 0.20% by mass to 5.00% by mass, and even further still more preferably 0.25% by mass to 5.00% by mass.

In a case where the content of the crosslinking agent with respect to the total amount of the pretreatment liquid is 0.10% by mass or more, the boiling resistance of the laminate is further improved. The reason is considered to be that the action of the crosslinking agent is more effectively exhibited.

The boiling resistance of the laminate is further improved even in a case where the content of the crosslinking agent with respect to the total amount of the pretreatment liquid is 10.00% by mass or less. The reason is considered to be that the flexibility of the obtained image (that is, the followability to the impermeable base material) is further improved.

In a case where the content of the crosslinking agent with respect to the total amount of the pretreatment liquid is 10.00% by mass or less, the storage stability of the pretreatment liquid is also further improved.

### <Organic solvent>

The pretreatment liquid according to the present disclosure may contain at least one organic solvent.

The kind of the organic solvent is not limited, and examples thereof include
a monoalcohol having 1 to 4 carbon atoms;
a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol;
a triol such as glycerin, 1,2,6-hexanetriol, or trimethylolpropane;
alkylene glycol such as ethylene glycol or propylene glycol;
alkylene glycol monoalkyl ether such as ethylene glycol monoalkyl ether or propylene glycol monoalkyl ether;
polyalkylene glycol such as diethylene glycol, triethylene glycol, tetraethylene glycol, pentaethylene glycol, dipropylene glycol, or polyoxyethylene polyoxypropylene glycol;
polyalkylene glycol ether such as diethylene glycol monoalkyl ether, triethylene glycol monoalkyl ether, tripropylene glycol monoalkyl ether, or polyoxypropylene glyceryl ether;
2-pyrrolidone, N-methyl-2-pyrrolidone, and the like.

The content of the organic solvent is preferably in a range of 1% by mass to 20% by mass and more preferably in a range of 3% by mass to 10% by mass with respect to the total amount of the pretreatment liquid.

### <Surfactant>

The pretreatment liquid according to the present disclosure may contain at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

The content of the surfactant is preferably in a range of 0.1% by mass to 5% by mass and more preferably in a range of 0.2% by mass to 1% by mass with respect to the total amount of the pretreatment liquid.

### <Other components>

The pretreatment liquid of the present disclosure may contain other components in addition to the above-described components as necessary.

Examples of other components that may be contained in the pretreatment liquid include known additives such as a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

### <Physical properties>

The pH of the pretreatment liquid is preferably in a range of 2.0 to 7.0 and more preferably in a range of 2.0 to 4.0. The pH is measured at 25°C using a pH meter, for example, a pH meter (model number "HM-31", manufactured by DKK-TOA CORPORATION).

From the viewpoint of the coating properties of the pretreatment liquid, the viscosity of the pretreatment liquid is preferably in a range of 0.5 mPa·s to 10 mPa·s and more preferably in a range of 1 mPa·s to 5 mPa·s. The viscosity is a value measured at 25°C using a viscometer. The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

### [Ink set]

The ink set of the present disclosure is an ink set for ink jet recording on an impermeable base material, the ink set containing
the pretreatment liquid of the present disclosure described above, and
an ink jet ink (hereinafter, also simply referred to as an "ink") containing water, a pigment, and a resin having a carboxy group.

Since the ink set of the present disclosure contains the pretreatment liquid of the present disclosure, the same effect as the effect of the pretreatment liquid of the present disclosure is exhibited.

### <Ink>

The ink set of the present disclosure contains an ink containing water, a pigment, and a resin having a carboxy group.

The ink included in the ink set of the present disclosure may be only one kind or two or more kinds.

### (Water)

The ink contains water.

A content of the water is preferably 10% by mass or more, more preferably 20% by mass or more, still more preferably 30% by mass or more, and particularly preferably 50% by mass or more with respect to the total amount of the ink.

The upper limit of the content of the water is appropriately determined according to contents of other components, and is, for example, 99% by mass, preferably 95% by mass, and more preferably 90% by mass with respect to the total amount of the ink.

### (Resin having carboxy group)

The ink contains at least one resin having a carboxy group.

### -Urethane resin having carboxy group-

The resin having a carboxy group contained in the ink preferably includes a urethane resin having a carboxy group.

The urethane resin having a carboxy group, which may be contained in the ink, is preferably a polyester-based urethane resin having a carboxy group and having an ester bond in the main chain, a polycarbonate-based urethane resin having a carboxy group and a carbonate bond in the main chain, or a polyether-based urethane resin having a carboxy group and having an ether bond in the main chain.

The urethane resin having a carboxy group, which may be contained in the ink, may be a water-soluble urethane resin or a water-insoluble urethane resin (that is, urethane resin particles).

Among these, from the viewpoint of increasing the strength of the layer to be formed by using the ink, it is preferable that the urethane resin is in the form of urethane resin particles.

In a case where the urethane resin containing a carboxy group, which may be contained in the ink, is in the form of urethane resin particles, from the viewpoint of jetting stability, the average particle diameter of the urethane resin particles is preferably 1 nm to 200 nm, more preferably 3 nm to 200 nm, and still more preferably 5 nm to 50 nm.

The average particle diameter of the urethane resin particles in the ink can be measured by the same method as the method for measuring the average particle diameter of the urethane resin particles in the pretreatment liquid.

The weight-average molecular weight (Mw) of the urethane resin having a carboxy group, which may be contained in the ink, is not particularly limited, but is preferably 1,000 to 300,000, more preferably 2,000 to 200,000, and still more preferably 10,000 to 150,000.

The weight-average molecular weight of the urethane resin having a carboxy group, which may be contained in the ink, can be measured by the same method as the weight-average molecular weight of the nonionic urethane resin in the pretreatment liquid.

The urethane resin having a carboxy group, which may be contained in the ink, may be a commercially available product.

Examples of the commercially available product include SUPERFLEX Series (manufactured by DKS Co., Ltd.), PERMARIN UA Series and UCOAT Series (manufactured by Sanyo Chemical Industries, Ltd.), TAKELAC Series (manufactured by Mitsui Chemicals, Inc.), and PUE Series (manufactured by Murayama Chemical Research Laboratory Co., Ltd.).

The content of the urethane resin having a carboxy group, which may be contained in the ink, is preferably in a range of 1% by mass to 25% by mass, more preferably in a range of 2% by mass to 20% by mass, and still more preferably in a range of 5% by mass to 20% by mass with respect to the total amount of the ink.

### -Pigment dispersing resin having carboxy group-

The resin having a carboxy group contained in the ink may include a pigment dispersing resin having a carboxy group.

Examples of the pigment dispersing resin having a carboxy group include a pigment dispersing resin having a carboxy group among the pigment dispersing resins described later.

### (Content of resin having carboxy group)

The content of the resin having a carboxy group in the ink is preferably in a range of 1.0% by mass to 10.0% by mass, more preferably in a range of 3.0% by mass to 9.0% by mass, and still more preferably in a range of 4.0% by mass to 8.0% by mass with respect to the entire ink.

For example, in a case where the resin having a carboxy group in the ink is a urethane resin having a carboxy group and a pigment dispersing resin having a carboxy group, the content of the resin having a carboxy group in the ink referred to here is the total amount of the urethane resin having a carboxy group and the pigment dispersing resin having a carboxy group.

### (Pigment)

The ink contains at least one pigment.

The pigment contained in the ink may be a white pigment or a color pigment.

The ink may be a white ink containing a white pigment or a colored ink containing a color pigment.

In the present disclosure, the color pigment denotes a chromatic pigment or a black pigment.

In the present disclosure, the colored ink denotes a chromatic ink (such as a cyan ink, a magenta ink, or a yellow ink) or a black ink.

From the viewpoint of covering property of an image to be obtained (that is, property of covering a surface on which the image is recorded, such as a surface of the impermeable base material), the ink is preferably a white ink containing a white pigment.

Here, the covering property of the image means a property of covering a surface (for example, a surface of an impermeable base material, a surface of an image formed as an undercoat, or the like) on which the image is recorded.

### (White pigment)

Examples of the white pigment include inorganic pigments such as titanium dioxide, barium sulfate, calcium carbonate, silica, zinc oxide, zinc sulfide, mica, talc, and pearl.

Among these, the white pigment is preferably titanium dioxide, barium sulfate, calcium carbonate, or zinc oxide and more preferably titanium dioxide.

From the viewpoint of the covering property, the average primary particle diameter of the white pigment is preferably 150 nm or greater and more preferably 200 nm or greater. Further, from the viewpoint of the jettability of the ink, the average primary particle diameter of the white pigment is preferably 400 nm or less and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by a TEM, measuring the primary particle diameters of 50 particles, and averaging the measured diameters. As the transmission electron microscope, a transmission electron microscope 1200EX (manufactured by JEOL Ltd.) can be used.

From the viewpoints of the image density and the jettability, the content of the white pigment is preferably in a range of 2% by mass to 25% by mass, more preferably in a range of 5% by mass to 25% by mass, and still more preferably in a range of 10% by mass to 20% by mass with respect to the total amount of the ink.

Further, the ink may contain a color pigment in place of the white pigment in addition to the white pigment.

In a case of an aspect in which the ink contains a color pigment, the kind and the content of the color pigment can refer to the description in the section of the second ink described later.

### (Pigment dispersing resin)

The ink may contain at least one pigment dispersing resin.

In the present disclosure, the pigment dispersing resin is a resin having a function of dispersing a pigment.

The pigment dispersing resin may be a random copolymer or a block copolymer.

Further, the pigment dispersing resin may have a crosslinking structure.

The ink may be prepared using a pigment dispersion liquid containing a pigment and a pigment dispersing resin.

A random copolymer is preferable as the pigment dispersing resin.

It is preferable that the random copolymer has a structural unit derived from a hydrophobic monomer and a structural unit derived from a monomer containing an anionic group (hereinafter, referred to as "anionic group-containing monomer"). From the viewpoint of dispersion stability, the content ratio (x:y) of a structural unit x derived from a hydrophobic monomer to a structural unit y derived from an anionic group-containing monomer is preferably in a range of 8:1 to 1:1.

The structural unit contained in the random copolymer and derived from a hydrophobic monomer may be used alone or two or more kinds thereof.

The structural unit contained in the random copolymer and derived from an anionic group-containing monomer may be used alone or two or more kinds thereof.

The hydrophobic monomer includes preferably a monomer containing a hydrocarbon group having 4 or more carbon atoms, more preferably an ethylene unsaturated monomer containing a hydrocarbon group having 4 or more carbon atoms, and still more preferably a (meth)acrylate containing a hydrocarbon group having 4 or more carbon atoms. The hydrocarbon group may be any of a chain-like hydrocarbon group, an alicyclic hydrocarbon group, or an aromatic hydrocarbon group. The number of carbon atoms of the hydrocarbon group is more preferably 6 or more and still more preferably 10 or more. The upper limit of the number of carbon atoms of the hydrocarbon group is, for example, 20.

Examples of the (meth)acrylate containing a chain-like hydrocarbon group having 4 or more carbon atoms include n-butyl (meth)acrylate, 2-ethylhexyl (meth)acrylate, octyl (meth)acrylate, lauryl (meth)acrylate, and stearyl (meth)acrylate. The number of carbon atoms in the chain-like hydrocarbon group is preferably 6 or more, more preferably 8 or more, and particularly preferably 12 or more. Among these, it is preferable that the ethylene unsaturated monomer containing a chain-like hydrocarbon group having 4 or more carbon atoms is lauryl (meth)acrylate or stearyl (meth)acrylate.

Examples of the (meth)acrylate containing an alicyclic hydrocarbon group having 4 or more carbon atoms include (bicyclo[2.2.1]heptyl-2) (meth)acrylate, 1-adamantyl (meth)acrylate, 2-adamantyl (meth)acrylate, 3-methyl-1-adamantyl (meth)acrylate, 3,5-dimethyl-1-adamantyl (meth)acrylate, 3-ethyladamantyl (meth)acrylate, 3-methyl-5-ethyl-1-adamantyl (meth)acrylate, 3,5,8-triethyl-1-adamantyl (meth)acrylate, 3,5-dimethyl-8-ethyl-1-adamantyl (meth)acrylate, 2-methyl-2-adamantyl (meth)acrylate, 2-ethyl-2-adamantyl (meth)acrylate, 3-hydroxy-1-adamantyl (meth)acrylate, octahydro-4,7-methanoinden-5-yl (meth)acrylate, octahydro-4,7-methanoinden-1-ylmethyl (meth)acrylate, 1-methyl (meth)acrylate, tricyclodecane (meth)acrylate, 3-hydroxy-2,6,6-trimethyl-bicyclo[3.1.1]heptyl (meth)acrylate, 3,7,7-trimethyl-4-hydroxy-bicyclo[4.1.0]heptyl (meth)acrylate, (nor)bornyl (meth)acrylate, isobornyl (meth)acrylate, 2,2,5-trimethylcyclohexyl (meth)acrylate, and cyclohexyl (meth)acrylate. The number of carbon atoms of the alicyclic hydrocarbon group is more preferably 6 or more. Among these, it is preferable that the ethylene unsaturated monomer containing an alicyclic hydrocarbon group having 4 or more carbon atoms is isobornyl (meth)acrylate or cyclohexyl (meth)acrylate.

Examples of the (meth)acrylate containing an aromatic hydrocarbon group having 4 or more carbon atoms include 2-naphthyl (meth)acrylate, phenoxyethyl (meth)acrylate, and benzyl (meth)acrylate. Among these, benzyl (meth)acrylate is preferable as the ethylene unsaturated monomer containing an aromatic hydrocarbon group having 4 or more carbon atoms.

The hydrophobic monomer may further contain a (meth)acrylate containing a hydrocarbon group having 1 to 3 carbon atoms.

Examples of the (meth)acrylate containing a hydrocarbon group having 1 to 3 carbon atoms include methyl (meth)acrylate, ethyl (meth)acrylate, n-propyl (meth)acrylate, and hydroxyethyl (meth)acrylate.

Among these, from the viewpoint of improving the dispersion stability of the white pigment, it is preferable that the structural unit contained in the pigment dispersing resin and derived from a hydrophobic monomer includes a structural unit derived from a (meth)acrylate containing a chain-like hydrocarbon group having 4 or more carbon atoms and a structural unit derived from a (meth)acrylate containing an aromatic hydrocarbon group having 4 or more carbon atoms.

Examples of the anionic group in the anionic group-containing monomer include a carboxy group, a salt of the carboxy group, a sulfo group, a salt of the sulfo group, a phosphoric acid group, a salt of the phosphoric acid group, a phosphonic acid group, and a salt of the phosphonic acid group.

Examples of the counterion in a salt include an alkali metal ion such as a sodium ion, a potassium ion, or a lithium ion, an alkaline earth metal ion such as a calcium ion or a magnesium ion, and an ammonium ion.

Among these, a carboxy group or a salt of the carboxy group is preferable as the anionic group.

Examples of the carboxy group-containing monomer include (meth)acrylic acid, β-carboxyethyl acrylate, fumaric acid, itaconic acid, maleic acid, and crotonic acid.

From the viewpoint of the dispersion stability, (meth)acrylic acid or β-carboxyethyl acrylate is preferable, and (meth)acrylic acid is more preferable as the anionic group-containing monomer.

The ratio between the content of the white pigment and the content of the pigment dispersing resin is preferably in a range of 1:0.04 to 1:3, more preferably in a range of 1:0.05 to 1:1, and still more preferably in a range of 1:0.05 to 1:0.5 in terms of the mass.

From the viewpoint of the dispersion stability, the acid value of the pigment dispersing resin is preferably 100 mgKOH/g or greater and more preferably 120 mgKOH/g or greater.

On the other hand, from the viewpoint of dispersion stability, the acid value of the pigment dispersing resin is preferably 300 mgKOH/g or less and more preferably 230 mgKOH/g or less.

In a case where the ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

### (Organic solvent)

It is preferable that the ink contains an organic solvent.

In this manner, jetting stability is improved.

The colored ink may contain only one or two or more kinds of organic solvents.

Examples of the organic solvent include the same organic solvents as the organic solvents contained in the pretreatment liquid.

From the viewpoint of the jetting stability, it is preferable that the organic solvent includes at least one selected from the group consisting of alkylene glycol and alkylene glycol monoalkyl ether.

A content of the organic solvent is preferably 10% by mass to 40% by mass and more preferably 15% by mass to 30% by mass with respect to the total amount of the ink.

### (Additive)

The ink may contain an additive such as a surfactant, a water-soluble resin, a co-sensitizer, an ultraviolet absorbing agent, an antioxidant, a fading inhibitor, a conductive salt, and a basic compound, as necessary.

### (Physical properties)

From the viewpoint of improving the jetting stability, a pH (25°C) of the ink is preferably 7 to 10 and more preferably 7.5 to 9.5. The pH of the colored ink can be measured by the same method as that for the pH of the pretreatment liquid.

The viscosity (30°C) of the ink is preferably in a range of 0.5 mPa·s to 30 mPa·s, more preferably in a range of 2 mPa·s to 20 mPa·s, preferably in a range of 2 mPa·s to 15 mPa·s, and even still more preferably in a range of 3 mPa·s to 10 mPa·s. The viscosity of the colored ink can be measured by the same method as that for the viscosity of the pretreatment liquid.

A surface tension (25°C) of the ink is preferably 60 mN/m or less, more preferably 20 mN/m to 50 mN/m, and still more preferably 30 mN/m to 45 mN/m.

The surface tension can be measured by the same method as that for the pretreatment liquid.

### <First ink and second ink>

An ink set according to the embodiment of the present disclosure may include
a white ink (hereinafter, also referred to as a "first ink") which is an ink jet ink containing water, a white pigment, and a resin having a carboxy group, and
a colored ink (hereinafter, also referred to as a "second ink") which is an ink jet ink containing water, a color pigment, and a resin having a carboxy group.

In this case, the ink set may include two or more kinds of white inks, or may include two or more kinds of colored inks (for example, a combination of a cyan ink, a magenta ink, a yellow ink, and a black ink).

That is, one specific aspect of the ink set of the present disclosure is an aspect including
the pretreatment liquid of the present disclosure,
a first ink as a white ink which is an ink jet ink containing water, a white pigment, and a resin having a carboxy group, and
a second ink as a colored ink which is an ink jet ink containing water, a color pigment, and a resin having a carboxy group.

The preferable aspects of the second ink are the same as the preferable aspects of the first ink (that is, the white ink) except that the second ink contains a color pigment as an indispensable component.

For example, the preferred aspect of each of the kind and content of each component in the second ink is the same as the preferred aspect of each of the kind and content of each component in the first ink.

### (Color pigment)

A commercially available organic pigment or inorganic pigment may be used as the color pigment.

Examples of the coloring pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

Further, the color pigment may be a water-insoluble pigment that can be dispersed in water by a dispersing agent, or may be a self-dispersing pigment.

The self-dispersing pigment is a pigment that can be dispersed in water without using a dispersing agent.

The self-dispersing pigment is, for example, a compound in which at least one selected from the group consisting of hydrophilic groups such as a carbonyl group, a hydroxyl group, a carboxyl group, a sulfo group, and a phosphoric acid group and salts thereof is chemically bonded to a surface of a pigment directly or via another group.

The kind of the color pigment is not particularly limited, and examples thereof include a cyan pigment, a magenta pigment, a yellow pigment, and a black pigment.

From the viewpoints of the image density and the jettability of the second ink, the content of the color pigment is preferably in a range of 1% by mass to 20% by mass, more preferably in a range of 1% by mass to 15% by mass, and still more preferably in a range of 1% by mass to 10% by mass with respect to the total amount of the second ink.

### [Image recording method]

The image recording method of the present disclosure includes
a step of applying the pretreatment liquid of the present disclosure onto an impermeable base material (hereinafter, also referred to as a "pretreatment liquid applying step"), and
a step of applying an ink (that is, an ink jet ink, the same applies hereinafter) containing water, a pigment, and a resin having a carboxy group onto a region onto which the pretreatment liquid is applied on the impermeable base material by an ink jet method (hereinafter, also referred to as an "ink applying step").

Since the image recording method of the present disclosure uses the above-described pretreatment liquid of the present disclosure, the same effect as the effect of the above-described pretreatment liquid of the present disclosure is exhibited.

The ink used in the ink applying step has the same meaning as the ink described in the section of the ink set of the present disclosure described above, and the same applies to the preferred aspect thereof.

For example, the resin having a carboxy group contained in the ink used in the ink applying step preferably includes a urethane resin having a carboxy group.

In addition, from the viewpoint of covering property of the image, the ink used in the ink applying step is preferably a white ink containing a white pigment.

The application amount (g/m²) of the crosslinking agent in the pretreatment liquid to be applied onto the impermeable base material is preferably 0.3% by mass to 50.0% by mass, more preferably 1.0% by mass to 30.0% by mass, still more preferably 1.0% by mass to 25.0% by mass, and even still more preferably 1.0% by mass to 22.0% by mass with respect to the application amount (g/m²) of the resin having a carboxy group in the ink to be applied onto the impermeable base material.

Hereinafter, the ratio (% by mass) of the application amount (g/m²) of the crosslinking agent in the pretreatment liquid applied onto the impermeable base material to the application amount (g/m²) of the resin having a carboxy group in the ink applied onto the impermeable base material is also referred to as "application amount ratio [crosslinking agent in pretreatment liquid/resin having carboxy group in ink]".

In a case where the application amount ratio [crosslinking agent in pretreatment liquid/resin having carboxy group in ink] is 0.3% by mass or more, the boiling resistance of the laminate is further improved. The reason is considered to be that the action of the crosslinking agent is more effectively exhibited.

In the application amount ratio [crosslinking agent in pretreatment liquid/resin containing carboxy group in ink], even in a case where the content of the crosslinking agent with respect to the total amount of the pretreatment liquid is 50.0% by mass or less, the boiling resistance of the laminate is further improved. The reason is considered to be that the flexibility of the obtained image (that is, the followability to the impermeable base material) is further improved.

Hereinafter, each step of the image recording method according to the embodiment of the present disclosure will be described.

### <Pretreatment liquid applying step>

The pretreatment liquid applying step is a step of applying the pretreatment liquid in the ink set of the present disclosure (that is, the pretreatment liquid of the present disclosure) onto the impermeable base material.

### (Impermeable base material)

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin. That is, it is preferable that the impermeable base material is a resin base material.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or nonwoven fabric formed of impermeable fibers in addition to a sheet-like (film-like) or plate-like impermeable base material.

Further, the thickness of the impermeable base material is preferably in a range of 0.1 µm to 1,000 µm, more preferably in a range of 0.1 µm to 800 µm, and still more preferably in a range of 1 µm to 500 µm.

The impermeable base material may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The impermeable base material may be an impermeable base material having transparency.

Here, the expression of "having transparency" denotes that the transmittance of visible light having a wavelength of 400 nm to 700 nm is 80% or greater (preferably 90% or greater).

In a case where the impermeable base material is an impermeable base material having transparency, the image is easily visually recognized through the impermeable base material from the image non-recorded surface side of the impermeable base material.

For example, in a case where the impermeable base material is an impermeable base material having transparency, a colored image (for example, a pattern image such as a character or a figure) having a white image (for example, a solid image) as a background is easily visually recognized through the impermeable base material from the image non-recorded surface side of the impermeable base material in a case where the pretreatment liquid, the second ink as the colored ink, and the ink as the white ink are applied in this order onto the impermeable base material to record an image.

### (Application of pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

The application amount of the pretreatment liquid applied onto the impermeable base material is preferably 0.5 g/m² to 5.0 g/m² and more preferably 1.0 g/m² to 4.0 g/m².

### (Heating and drying pretreatment liquid)

The pretreatment liquid applying step may include applying the pretreatment liquid onto the impermeable base material and heating and drying the pretreatment liquid applied onto the impermeable base material.

Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the impermeable base material opposite to the surface onto which the pretreatment liquid has been applied; a method of applying warm air or hot air to the surface of the impermeable base material onto which the pretreatment liquid has been applied; a method of applying heat using an infrared heater from the surface of the impermeable base material onto which the pretreatment liquid has been applied or from a side of the impermeable base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

### <Ink applying step>

The ink applying step is a step of applying an ink onto a region of the impermeable base material, onto which the pretreatment liquid is applied, by an ink jet recording method.

By performing the present step, the components in the ink are aggregated by the action of the aggregating agent in the pretreatment liquid on the impermeable base material, and thus an image is obtained.

### (Application of ink)

The method of jetting the ink in the ink jet recording method is not particularly limited, and any of known methods such as an electric charge control method of jetting an ink using an electrostatic attraction force, a drop-on-demand method (pressure pulse method) using a vibration pressure of a piezoelectric element, an acoustic ink jet method of jetting an ink using a radiation pressure by converting an electric signal into an acoustic beam and irradiating the ink with the acoustic beam, and a thermal ink jet (bubble jet (registered trademark)) method of heating an ink to form air bubbles and using the generated pressure may be used.

As the ink jet recording method, particularly, an ink jet recording method, described in JP1979-59936A (JP-S54-59936A), of jetting an ink from a nozzle using an action force caused by a rapid change in volume of the ink after being subjected to an action of thermal energy can be effectively used. Further, as the ink jet recording method, the method described in paragraphs 0093 to 0105 of JP2003-306623A can also be employed.

The application of the ink onto the impermeable base material using the ink jet recording method is performed by allowing the ink to be jetted from a nozzle of an ink jet head.

Examples of the system of the ink jet head include a shuttle system of performing recording while scanning a short serial head in the width direction of a medium to be recorded and a line system of using a line head in which recording elements are aligned in correspondence with the entire area of one side of a medium to be recorded.

In the line system, image recording can be performed on the entire surface of the medium to be recorded by scanning the medium to be recorded in a direction intersecting the direction in which the recording elements are aligned. In the line system, a transport system such as a carriage that scans a short head in the shuttle system is not necessary. Further, in the line system, since movement of a carriage and complicated scanning control between the short head and the recorded medium are not necessary as compared with the shuttle system, only the recorded medium moves. Therefore, according to the line system, image recording at a higher speed than that of the shuttle system can be realized.

The ink is preferably applied using an ink jet head having a resolution of 300 dpi or more (more preferably 600 dpi or more and still more preferably 800 dpi or more). Here, dpi stands for dot per inch, and 1 inch is 2.54 cm.

From the viewpoint of obtaining an image with high definition, a droplet amount of the ink is preferably 1 picoliter (pL) to 10 pL and more preferably 1.5 pL to 6 pL.

The application amount of the ink onto the region of the impermeable base material onto which the pretreatment liquid is applied is preferably in a range of 3.0 g/m² to 15.0 g/m² and more preferably in a range of 5.0 g/m² to 12.0 g/m².

### (Heating and drying)

The ink applying step may include
applying the ink to the region onto the impermeable base material to which the pretreatment liquid is applied by an ink jet method, and
heating and drying the applied ink.

A method of heating and drying is not particularly limited, and examples thereof include infrared (IR) drying, warm air drying, and heating and drying using a heating device (for example, a heater, a hot plate, a heating furnace, or the like).

The method of heating and drying may be a method of combining two or more of the above-described methods.

The heating and drying can be performed by heating the ink from at least one of the image recorded surface side or the image non-recorded surface side of the impermeable base material.

A heating temperature in the heating and drying of the ink is preferably 35°C or higher, more preferably 40°C or higher, still more preferably 50°C or higher, and even more preferably 60°C or higher.

The upper limit of the heating temperature is not particularly limited, but is preferably 100°C and more preferably 90°C.

A heating time in the heating and drying of the ink is not particularly limited, but is preferably 1 second to 180 seconds, more preferably 1 second to 120 seconds, and still more preferably 1 second to 60 seconds.

### <Embodiment>

As an example of the image recording method of the present disclosure in a case of using two or more color inks, an image recording method using the above-described first ink (that is, white ink) and second ink (that is, colored ink) is shown.

The image recording method according to the present example includes
a step of applying the pretreatment liquid of the present disclosure onto the impermeable base material, and
a step of applying each of the first ink (that is, the white ink) and the second ink (that is, the colored ink) onto the region of the impermeable base material onto which the pretreatment liquid is applied, by an ink jet recording method.

The step of applying the pretreatment liquid onto the impermeable base material is as described above.

According to the image recording method of the present embodiment, a multicolor image can be recorded with the first ink (that is, the white ink) and the second ink (that is, the colored ink).

Examples of the multicolor image include a colored image (for example, a pattern image such as a character or a figure) having a white image (for example, a solid image) as a background.

Any of the first ink (that is, the white ink) or the second ink (that is, the colored ink) may be applied first in the application order.

For example, in a case where the image is visually recognized from the image recording surface side, the first ink (that is, the white ink) and the second ink (that is, the colored ink) are applied in this order.

In a case where the image is visually recognized from the image non-recording surface side through the impermeable base material, the second ink (that is, the colored ink) and the first ink (that is, the white ink) are applied in this order. In this manner, for example, a multicolor image in which a pattern image (a character, a figure, or the like) recorded with the colored ink and a white image in the form of a solid image recorded with the white ink to cover the pattern image are disposed on the impermeable base material in this order is recorded.

The method of applying each of the first ink and the second ink using an ink jet recording method in the step of applying the first ink and the second ink is as described above.

Further, the step of applying the first ink and the second ink may include heating and drying the inks after application of at least one of the first ink or the second ink. The preferable conditions for heating and drying are as described above.

For example, as an aspect of the present step, an aspect in which the application of the second ink (that is, the colored ink), the application of the first ink (that is, the white ink), and the drying are performed in this order is mentioned. In this aspect, the second ink may or may not be heated and dried between the application of the second ink and the application of the ink.

### [Method of producing laminate]

A method of producing a laminate according to the present disclosure includes
a step of obtaining an image recorded material that includes the impermeable base material and an image disposed on the impermeable base material by the image recording method of the present disclosure described above, and
a step of laminating a base material for lamination on a side of the image recorded material where the image has been disposed, to obtain a laminate.

Since the method of producing a laminate according to the present disclosure includes the image recording method according to the present disclosure described above, the same effects as the effects of the image recording method according to the present disclosure described above are exhibited. Specifically, a laminate having excellent boiling resistance can be obtained.

The step of obtaining an image recorded material can refer to the image recording method of the present disclosure.

The step of obtaining a laminate is a step of laminating the base material for lamination on a side of the image recorded material where the image has been disposed, to obtain a laminate.

The lamination can be performed by a method of superimposing the base material for lamination on the side of the image recorded material where the image has been disposed via another layer (for example, an adhesive layer) and attaching the base material thereto, a method of attaching the base material for lamination to the side of the image recorded material where the image has been disposed via a laminator in a state where the base material is superimposed on the side thereof, or the like. In the latter case, a commercially available laminator can be used.

The lamination temperature in a case of carrying out the lamination is not particularly limited. For example, in a case where the image recorded material and the base material for lamination are attached to each other via another layer (for example, an adhesive layer), the temperature may be 20°C or higher. Further, in a case where a laminator is used, the temperature of a laminating roll may be set to be in a range of 20°C to 80°C. The pressure-bonding force between a pair of laminating rolls may be appropriately selected as necessary.

It is preferable that the base material for lamination is a resin base material.

The resin base material is not particularly limited, and examples thereof include a base material consisting of a thermoplastic resin.

A base material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 µm to 200 µm and more preferably in a range of 10 µm to 100 µm.

In the step of obtaining a laminate, the base material for lamination may be laminated directly on a side of the image recorded material where the image has been disposed or via another layer (for example, an adhesive layer).

In a case where the base material for lamination is laminated directly on a side of the image recorded material where the image has been disposed, the lamination can be performed by a known method such as thermocompression bonding or thermal fusion welding.

Further, in a case where the base material for lamination is laminated on a side of the image recorded material where the image has been disposed via an adhesive layer, the lamination can be performed by, for example, a method of coating the side of the image recorded material where the image has been disposed with an adhesive, placing the base material for lamination, and bonding the image recorded material to the base material for lamination.

Further, in the case where the base material for lamination is laminated on a side of the image recorded material where the image has been disposed via an adhesive layer, the lamination can also be performed by an extrusion lamination method (that is, sandwich lamination) or the like.

It is preferable that the adhesive layer contains an isocyanate. In a case where the adhesive layer contains an isocyanate, since the adhesiveness between the adhesive layer and the image is further improved, the boiling resistance can be further improved.

### [Image recorded material]

An image recorded material according to the present disclosure comprising:
an impermeable base material; and
an image disposed on the impermeable base material,
in which the image includes
   a pretreatment layer disposed on the impermeable base material and containing an aggregating agent, a nonionic urethane resin, and a crosslinking agent, and
   an ink layer disposed on the pretreatment layer and containing a pigment and a resin having a carboxy group.

The image recorded material of the present disclosure can be produced by the image recording method of the present disclosure.

Therefore, a laminate with excellent boiling resistance can be produced.

Regarding the components in the pretreatment layer and the components in the ink layer, the components of the pretreatment liquid and the components of the ink can be appropriately referred to.

### [Laminate]

The laminate of the present disclosure includes
the above-described image recorded material of the present disclosure, and
a base material for lamination laminated on the image of the image recorded material.

The laminate of the present disclosure can be produced by the method of producing the laminate of the present disclosure.

Therefore, the boiling resistance is excellent.

The preferable aspects of the base material for lamination are as described above. Examples

Hereinafter, the present disclosure will be described in more detail based on examples, but the present disclosure is not limited to the following examples unless the gist thereof is overstepped.

### [Examples 1 to 27 and Comparative Examples 1 to 5]

### <Preparation of pretreatment liquid>

The following components were mixed to have the following contents, thereby preparing a pretreatment liquid.

### -Composition of pretreatment liquid-

· Aggregating agent described in Table 1 ... amount (% by mass) described in Table 1
· Resin described in Table 1 ... amount described in Table 1 (% by mass) (content as a resin which is a solid content)
· Crosslinking agent described in Table 1 ... amount (mass%) described in Table 1
· BYK-024 (manufactured by BYK-Chemie GmbH, anti-foaming agent) ... 0.01% by mass
· Dimethylaminoethanol ... 0.1% by mass
· SURFYNOL 104 (manufactured by Nissin Chemical Co., Ltd., surfactant) ... 0.5% by mass
· Water ... remaining amount such that total amount of pretreatment liquid is 100% by mass

### "%" in each amount in Table 1 means % by mass.

The details of the aggregating agents described in Table 1 are as follows.
· Glutaric acid ... manufactured by FUJIFILM Wako Pure Chemical Corporation
· Calcium acetate Ca ... calcium acetate (manufactured by FUJIFILM Wako Pure Chemical Corporation)

The details of the crosslinking agent shown in Table 1 are as follows.
· SV-2 ... CARBODILITE SV-02 (manufactured by Nisshinbo Chemical Inc., compound having a carbodiimide group)
· WS-500 ... EPOCROSS WS-500 (manufactured by Nippon Shokubai Co., Ltd., compound having oxazoline group))
· PZ-33 ... CHEMITITE PZ-33 (manufactured by Nippon Shokubai Co., Ltd., compound having an aziridine group)

The details of the resins listed in Table 1 are as follows.

Further, the resin emulsion denotes a dispersion liquid containing a resin, and the resin is present in the form of resin particles in a liquid.
· SF 500M ... SUPERFLEX 500M (manufactured by DKS Co., Ltd., resin emulsion containing nonionic urethane resin).

The glass transition temperature (Tg) of the nonionic urethane resin is -39°C, and the breaking elongation is 1100%.
· PUE-1370 ... PUE-1370 (manufactured by Murayama Chemical Research Laboratory Co., Ltd., resin emulsion containing nonionic urethane resin). The glass transition temperature (Tg) of the nonionic urethane resin is -59°C, and the breaking elongation is 1200%.
· UA-200 ... PERMARIN UA-200 (manufactured by Sanyo Chemical Industries, Ltd., resin emulsion containing an anionic urethane resin).
· SF 620 ... SUPERFLEX 620 (manufactured by DKS Co., Ltd., resin emulsion containing cationic urethane resin)
· A615-GE ... PES resin A615-GE (manufactured by Takamatsu Oil & Fat Co., Ltd., resin emulsion containing anionic polyester).

### <Preparation of white ink>

In order to prepare a white ink which is an ink jet ink, first, a pigment dispersing resin W was synthesized.

### -Synthesis of pigment dispersing resin W-

100 g of dipropylene glycol was added to a three-neck flask provided with a stirrer and a cooling pipe and heated to 85°C in a nitrogen atmosphere.

A solution 1 obtained by mixing 14.0 g of stearyl methacrylate, 35.3 g of benzyl methacrylate, 20.0 g of hydroxyethyl methacrylate, 30.7 g of methacrylic acid, and 0.55 g of 2-mercaptopropionic acid and a solution 2 obtained by dissolving 1.0 g of t-butylperoxy-2-ethylhexanoate (product name, "Perbutyl O", manufactured by NOF Corporation) in 20 g of dipropylene glycol were respectively prepared.

The solution 1 was added dropwise to the three-neck flask for 4 hours, and the solution 2 was added dropwise thereto for 5 hours.

After the completion of the dropwise addition, the resulting solution was allowed to further react for 2 hours, heated to 95°C, and heated and stirred for 3 hours so that all unreacted monomers were allowed to react. The disappearance of monomers was confirmed by the nuclear magnetic resonance (¹H-NMR) method.

The obtained reaction solution was heated to 70°C, 12.0 g of dimethylethanolamine was added thereto as an amine compound, propylene glycol was added thereto, and the solution was stirred, thereby obtaining a 30 mass% solution of the pigment dispersing resin W.

The structural unit of the obtained pigment dispersing resin W was confirmed by ¹H-NMR. Further, the weight-average molecular weight (Mw) determined by GPC was 28000.

Further, the mass ratio of respective structural units in the pigment dispersing resin W (structural unit derived from stearyl methacrylate/structural unit derived from benzyl methacrylate/structural unit derived from hydroxyethyl methacrylate/structural unit derived from methacrylic acid) was 14/35.3/20/30.7. Here, the mass ratio does not include the mass of dimethylaminoethanol.

The acid value of the pigment dispersing resin W was 200 mgKOH/g.

The pigment dispersing resin W is a resin having a carboxy group.

### -Preparation of pigment dispersion liquid W-

45 parts by mass of titanium dioxide particles (product name, "PF-690", average primary particle diameter: 210 nm, manufactured by Ishihara Sangyo Kaisha, Ltd.) serving as a white pigment, 15 parts by mass of a 30 mass% solution of the pigment dispersing resin W, and 40 parts by mass of ultrapure water were added to a zirconia container zirconia. Further, 40 parts by mass of 0.5 mmφ zirconia beads (Torayceram beads, manufactured by Toray Industries, Inc.) were added thereto, and the mixture was mixed gently using a spatula. The zirconia container containing the obtained mixture was placed in a Lady mill (model LSG-4U-08 (manufactured by IMEX Co., Ltd.)), and the mixture was dispersed at a rotation speed of 1000 rpm (revolutions per minute) for 5 hours. After completion of the dispersion, the beads were removed by filtration with a filter cloth, thereby obtaining a pigment dispersion liquid W having a white pigment concentration of 45% by mass.

### -Preparation of white ink-

The following contents of the components were mixed using the prepared pigment dispersion liquid W, thereby preparing a white ink.

### -Composition of white ink-

· White pigment ... 15% by mass
· Pigment dispersing resin W (resin having carboxy group) ... 1.5% by mass
· 1,2-propanediol (also known as propylene glycol; PG) ... 20% by mass
· Propylene glycol monomethyl ether ... 5% by mass
· Surfactant (product name "Olfine E1010", manufactured by Nissin Chemical Co., Ltd.) ... 0.5% by mass
· Surfactant (product name "BYK-347", manufactured by BYK-Chemie GmbH) ... 0.5% by mass
· Colloidal silica (product name "SNOWTEX XS") ... 0.05% by mass in terms of solid content
· Water-soluble resin (polyvinylpyrrolidone) (product name, "PVP K-15", manufactured by Ashland Inc.) ... 0.1% by mass
· PERMARIN UA-200 (manufactured by Sanyo Chemical Industries, Ltd., resin emulsion containing resin particles which are urethane resin having a carboxy group) ... 4.5% by mass as amount of resin
· Water ... remaining amount such that total amount of white ink is 100% by mass

In Table 1, the amount of the resin having a carboxy group in the ink means the total amount (in terms of % by mass with respect to the total amount of the ink) of the pigment dispersing resin W and the urethane resin having a carboxy group in PERMARIN UA-200.

### <Image recording>

Image recording was performed using the pretreatment liquid and the white ink.

An ink jet recording device including a transport system for continuously transporting a long base material, a wire bar coater for coating the base material with the pretreatment liquid, and an ink jet head for applying the white ink was prepared.

Further, a polyethylene terephthalate (PET) base material ("FE2001", manufactured by Futamura Chemical Co., Ltd., (thickness of 12 µm, width of 780 mm, length of 4000 m; hereinafter, referred to as "impermeable base material A") serving as an impermeable base material was prepared as the base material.

The impermeable base material A was coated with the pretreatment liquid using a wire bar coater such that the amount of the pretreatment liquid to be applied reached approximately 2.0 g/m², and the pretreatment liquid was dried at 50°C for 2 seconds.

The white ink was jetted from the ink jet head and applied in the form of a solid image to the surface of the impermeable base material A, which had been coated with the pretreatment liquid, while the impermeable base material A was continuously transported at 50 m/min using the ink jet recording device. A solid image was recorded by drying the applied white ink with warm air at 80°C for 30 seconds, thereby obtaining an image recorded material.

### -Ink application conditions-

Ink jet head: 1200 dpi/30 inch-width piezo full line head
Amount of ink jetted from ink jet head: 3.0 picoliters (pL)
Driving frequency: 41 kHz (transportation speed of base material: 50 m/min)

### [Evaluation]

For each of Examples and Comparative Examples, the storage stability of the pretreatment liquid and the boiling resistance of the laminate formed of the image recorded material were evaluated.

The evaluation method is as follows.

The evaluation results are listed in Table 1.

### (Storage stability of pretreatment liquid)

The viscosity of the pretreatment liquid that was allowed to stand at 25°C for 1 hour after the preparation of the pretreatment liquid (hereinafter, referred to as "viscosity before storage") and the viscosity of the pretreatment liquid that was stored in a sealed state at 60°C for 14 days after the preparation of the pretreatment liquid (hereinafter, referred to as "viscosity after storage") were respectively measured.

Both the viscosity before storage and the viscosity after storage were measured under conditions of 25°C at 100 revolutions per minute (rpm) using VISCOMETER TV-22 (manufactured by TOKI SANGYO CO., LTD.).

Here, the sealed state indicates a state in which the contents are sealed in a container and the amount of decrease in the mass of the contents is less than 1% by mass in a case where the contents are stored under the conditions of 50°C for 14 days.

A value obtained by subtracting the viscosity before storage from the viscosity after storage was calculated as a degree of an increase in viscosity.

As the degree of an increase in viscosity decreases, the storage stability is excellent.

The evaluation standards are as follows.

### -Evaluation standards for storage stability of pretreatment liquid-

5: The degree of an increase in viscosity was less than 0.3 mPa·s.
4: The degree of an increase in viscosity was 0.3 mPa·s or greater and less than 0.5 mPa·s.
3: The degree of an increase in viscosity was 0.5 mPa·s or greater and less than 1.0 mPa·s.
2: The degree of an increase in viscosity was 1.0 mPa·s or greater and less than 2.0 mPa·s.
1: The degree of an increase in viscosity was 2.0 mPa·s or greater.

### (Boiling resistance of laminate)

The solid image of the image recorded material was coated with an adhesive for dry lamination (main agent TM-320 (isocyanate)/curing agent CAT-13B (alcohol compound), manufactured by TOYO Morton) using a dry laminating machine (product name, "FL2", manufactured by FUJI KIKAI KOGYO Co., Ltd.), and a linear low-density polyethylene film (product name, "LL-XMTN", manufactured by FUTAMURA CHEMICAL CO., LTD., thickness of 40 µm) was laminated thereon as a base material for lamination. The base material for lamination and the image recorded material were bonded to each other in this state, thereby obtaining a laminate.

### The obtained laminate was aged at 40°C for 48 hours.

Two sheets of sample pieces having a length of 200 mm and a width of 200 mm were cut out from the aged laminate. The cut-out sample pieces were overlapped with each other and three sides thereof were heat-sealed to form a bag. The obtained bag was filled with pure water and sealed by heat sealing.

The sealed bag was placed in an autoclave for retort food (small sterilizer) (product name, "SR-240", manufactured by Tomy Seiko Co., Ltd.) and subjected to a boiling treatment at 95°C for 40 minutes.

The bag was taken out after the boiling treatment, and the state of the bag was visually observed. Specifically, the boiling resistance was evaluated based on the presence or absence of deformation and laminate floating of the bag.

The evaluation standards are as follows.

The laminate floating is a state in which the image or the base material for lamination is peeled off and thus floating occurs.

### -Evaluation standards for boiling resistance of laminate-

5: Deformation and laminate floating were not observed.
4: Laminate floating was not found, but deformation was confirmed.
3: Laminate floating was confirmed at one site.
2: Laminate floating was confirmed at a plurality of sites.
1: Laminate floating was confirmed on the entire surface of the sample piece.

**[Table 1]**

| | Pretreatment liquid | | | | | | | | | | | Ink | | Application | Evaluation result | |
|---|---|---|---|---|---|---|---|---|---|---|---|---|---|---|---|---|
| | Aggregating agent | | Resin | | | | Crosslinking agent | | | Amount of crosslinking agent with respect to total amount of resin | Application amount (g/m²) | Amount of resin having carboxy group | Application amount (g/m²) | amount ratio [crosslinking agent in pretreatment liquid/resin having carboxy group in ink] | Boiling resistance | Storage stability of pretreatment liquid |
| | Type | Amount | Type | Classification | Ionic properties | Amount | Type | Functional group | Amount | | | | | | | |
| Example 1 | Glutaric acid | 3.0% | SF 500M | Urethane resin | Nonionic | 10% | SV-02 | Carbodiimide group | 0.25% | 2.5% | 1.0 | 6.0% | 8.0 | 0.5% | 4 | 5 |
| Example 2 | Glutaric acid | 3.0% | SF 500M | Urethane resin | Nonionic | 10% | SV-02 | Carbodiimide group | 0.25% | 2.5% | 2.0 | 6.0% | 8.0 | 1.0% | 5 | 5 |
| Example 3 | Glutaric acid | 3.0% | SF 500M | Urethane resin | Nonionic | 10% | SV-02 | Carbodiimide group | 0.25% | 2.5% | 5.0 | 6.0% | 8.0 | 2.6% | 5 | 5 |
| Example 4 | Glutaric acid | 3.0% | SF 500M | Urethane resin | Nonionic | 10% | SV-02 | Carbodiimide group | 3.00% | 30.0% | 1.0 | 6.0% | 8.0 | 6.3% | 5 | 5 |
| Example 5 | Glutaric acid | 3.0% | SF 500M | Urethane resin | Nonionic | 10% | SV-02 | Carbodiimide group | 3.00% | 30.0% | 2.0 | 6.0% | 8.0 | 12.5% | 5 | 5 |
| Example 6 | Glutaric acid | 3.0% | SF 500M | Urethane resin | Nonionic | 10% | SV-02 | Carbodiimide group | 3.00% | 30.0% | 5.0 | 6.0% | 8.0 | 31.3% | 4 | 5 |
| Example 7 | Glutaric acid | 3.0% | SF 500M | Urethane resin | Nonionic | 10% | SV-02 | Carbodiimide group | 1.00% | 10.0% | 2.0 | 6.0% | 8.0 | 4.2% | 5 | 5 |
| Example 8 | Glutaric acid | 3.0% | SF 500M | Urethane resin | Nonionic | 10% | SV-02 | Carbodiimide group | 5.00% | 50.0% | 2.0 | 6.0% | 8.0 | 20.8% | 5 | 5 |
| Example 9 | Glutaric acid | 3.0% | SF 500M | Urethane resin | Nonionic | 10% | SV-02 | Carbodiimide group | 6.00% | 60.0% | 2.0 | 6.0% | 8.0 | 25.0% | 4 | 4 |
| Example 10 | Glutaric acid | 3.0% | SF 500M | Urethane resin | Nonionic | 5% | SV-02 | Carbodiimide group | 0.25% | 5.0% | 2.0 | 6.0% | 8.0 | 1.0% | 5 | 5 |
| Example 11 | Glutaric acid | 3.0% | SF 500M | Urethane resin | Nonionic | 5% | SV-02 | Carbodiimide group | 3.00% | 60.0% | 2.0 | 6.0% | 8.0 | 12.5% | 4 | 5 |
| Example 12 | Glutaric acid | 3.0% | SF 500M | Urethane resin | Nonionic | 20% | SV-02 | Carbodiimide group | 0.25% | 1.3% | 2.0 | 6.0% | 8.0 | 1.0% | 4 | 5 |
| Example 13 | Glutaric acid | 3.0% | SF 500M | Urethane resin | Nonionic | 20% | SV-02 | Carbodiimide group | 3.00% | 15.0% | 2.0 | 6.0% | 8.0 | 12.5% | 5 | 5 |
| Example 14 | Glutaric acid | 3.0% | SF 500M | Urethane resin | Nonionic | 10% | SV-02 | Carbodiimide group | 0.25% | 2.5% | 2.0 | 9.0% | 8.0 | 0.7% | 4 | 5 |
| Example 15 | Glutaric acid | 3.0% | SF 500M | Urethane resin | Nonionic | 10% | SV-02 | Carbodiimide group | 5.00% | 50.0% | 2.0 | 3.0% | 8.0 | 41.7% | 4 | 5 |
| Example 16 | Glutaric acid | 3.0% | SF 500M | Urethane resin | Nonionic | 10% | SV-02 | Carbodiimide group | 0.25% | 2.5% | 2.0 | 6.0% | 12.0 | 0.7% | 4 | 5 |
| Example 17 | Glutaric acid | 3.0% | SF 500M | Urethane resin | Nonionic | 10% | SV-02 | Carbodiimide group | 5.00% | 50.0% | 2.0 | 6.0% | 5.0 | 33.3% | 4 | 5 |
| Example 18 | Glutaric acid | 3.0% | SF 500M | Urethane resin | Nonionic | 10% | WS-500 | Oxazoline group | 0.20% | 2.0% | 2.0 | 6.0% | 8.0 | 0.8% | 4 | 5 |
| Example 19 | Glutaric acid | 3.0% | SF 500M | Urethane resin | Nonionic | 10% | WS-500 | Oxazoline group | 0.25% | 2.5% | 2.0 | 6.0% | 8.0 | 1.0% | 5 | 5 |
| Example 20 | Glutaric acid | 3.0% | SF 500M | Urethane resin | Nonionic | 10% | WS-500 | Oxazoline group | 1.00% | 10.0% | 2.0 | 6.0% | 8.0 | 4.2% | 5 | 5 |
| Example 21 | Glutaric acid | 3.0% | SF 500M | Urethane resin | Nonionic | 10% | WS-500 | Oxazoline group | 5.00% | 50.0% | 2.0 | 6.0% | 8.0 | 20.8% | 5 | 5 |
| Example 22 | Glutaric acid | 3.0% | SF 500M | Urethane resin | Nonionic | 10% | WS-500 | Oxazoline group | 6.00% | 60.0% | 2.0 | 6.0% | 8.0 | 25.0% | 4 | 4 |
| Example 23 | Glutaric acid | 3.0% | SF 500M | Urethane resin | Nonionic | 10% | PZ-33 | Aziridine group | 0.25% | 2.5% | 2.0 | 6.0% | 8.0 | 1.0% | 4 | 5 |
| Example 24 | Glutaric acid | 3.0% | SF 500M | Urethane resin | Nonionic | 10% | PZ-33 | Aziridine group | 1.00% | 10.0% | 2.0 | 6.0% | 8.0 | 4.2% | 4 | 5 |
| Example 25 | Glutaric acid | 3.0% | SF 500M | Urethane resin | Nonionic | 10% | PZ-33 | Aziridine group | 5.00% | 50.0% | 2.0 | 6.0% | 8.0 | 20.8% | 4 | 5 |
| Example 26 | Glutaric acid | 3.0% | PUE-1370 | Urethane resin | Nonionic | 10% | SV-02 | Carbodiimide group | 1.00% | 10.0% | 2.0 | 6.0% | 8.0 | 4.2% | 5 | 5 |
| Example 27 | Acetic acid Ca | 3.0% | SF 500M | Urethane resin | Nonionic | 10% | SV-02 | Carbodiimide group | 1.00% | 10.0% | 2.0 | 6.0% | 8.0 | 4.2% | 5 | 5 |
| Comparative Example 1 | Glutaric acid | 3.0% | SF 500M | Urethane resin | Nonionic | 10% | None | | | - | 2.0 | 6.0% | 8.0 | - | 2 | 5 |
| Comparative Example 2 | Glutaric acid | 3.0% | UA-200 | Urethane resin | Anionic | 10% | SV-02 | Carbodiimide group | 0.25% | 2.5% | 2.0 | 6.0% | 8.0 | 1.0% | 1 | 2 |
| Comparative Example 3 | Glutaric acid | 3.0% | SF 620 | Urethane resin | Cationic | 10% | SV-02 | Carbodiimide group | 0.25% | 2.5% | 2.0 | 6.0% | 8.0 | 1.0% | 1 | 2 |
| Comparative Example 4 | Glutaric acid | 3.0% | A615-GE | Polyester | Anionic | 10% | SV-02 | Carbodiimide group | 0.25% | 2.5% | 2.0 | 6.0% | 8.0 | 1.0% | 1 | 4 |
| Comparative Example 5 | Glutaric acid | 3.0% | None | | | - | SV-02 | Carbodiimide group | 0.25% | - | 2.0 | 6.0% | 8.0 | 1.0% | 1 | 5 |

As listed in Table 1, in each of the examples in which the pretreatment liquid containing water, an aggregating agent, a nonionic urethane resin, and a crosslinking agent was used, the boiling resistance of the laminate (that is, the laminate obtained by applying the pretreatment liquid and the ink jet ink in this order onto the impermeable base material to record an image and obtaining an image recorded material, and laminating a base material for lamination on the image in the obtained image recorded material) was excellent.

With respect to each example, in all of
Comparative Example 1 in which the pretreatment liquid does not contain a crosslinking agent,
Comparative Example 2 in which the pretreatment liquid contains an anionic urethane resin instead of the nonionic urethane resin,
Comparative Example 3 in which the pretreatment liquid contains a cationic urethane resin instead of the nonionic urethane resin,
Comparative Example 4 in which the pretreatment liquid contains a polyester resin instead of the nonionic urethane resin, and
Comparative Example 5 in which the pretreatment liquid does not contain a resin, the boiling resistance of the laminate was degraded.

From the results of Examples 7, 8, 20, 21, 24, and 25, it was found that in a case where the crosslinking agent in the pretreatment liquid includes a compound having at least one of a carbodiimide group or an oxazoline group (Examples 7, 8, 20, and 21), the boiling resistance of the laminate is further improved.

From the results of Examples 8 and 9, it was found that in a case where the content of the crosslinking agent with respect to the total amount of the nonionic urethane resin was 2.0% by mass to 50% by mass (Example 8), the boiling resistance of the laminate was further improved, and the storage stability of the pretreatment liquid was further improved. The reason why the boiling resistance of the laminate is further improved in a case where the content of the crosslinking agent with respect to the total amount of the nonionic urethane resin is 50% by mass or less is considered to be that the flexibility of the image (that is, the followability to the impermeable base material) is further improved.

From the results of Examples 8 and 9, it was found that in a case where the content of the crosslinking agent with respect to the total amount of the pretreatment liquid was 0.10% by mass to 5.00% by mass (Example 8), the boiling resistance of the laminate was further improved, and the storage stability of the pretreatment liquid was further improved.

From the results of Examples 1 and 2, it was found that in a case where the application amount ratio [crosslinking agent in pretreatment liquid/resin having carboxy group in ink] (that is, the ratio (% by mass) of the application amount (g/m²) of the crosslinking agent in the pretreatment liquid applied onto the impermeable base material to the application amount (g/m²) of the resin having a carboxy group in the ink applied onto the impermeable base material) is 1.0% by mass or more (Example 2), the boiling resistance of the laminate is further improved.

From the results of Examples 5 and 6, it was found that in a case where the application amount ratio [crosslinking agent in pretreatment liquid/resin having carboxy group in ink] was 30% by mass or less (Example 5), the boiling resistance of the laminate was further improved.

### [Example 101] (Evaluation of multicolor image)

### <Preparation of colored ink>

Colored inks (specifically, a cyan ink, a magenta ink, a yellow ink, and a black ink) with the compositions listed in Table 2 were prepared.

**[Table 2]**

| | Cyan ink | Magenta ink | Yellow ink | Black ink |
|---|---|---|---|---|
| APD4000C (Solid content) | 3 | | | |
| APD4000M (Solid content) | | 4 | | |
| APD1000R (Solid content) | | 2 | | |
| APD4000Y (Solid content) | | | 4 | |
| APD4000K (Solid content) | | | | 7 |
| PG | 25 | 25 | 25 | 25 |
| PGmME | 3 | 3 | 3 | 3 |
| PGmPE | 1 | 1 | 1 | 1 |
| OLFINE E1010 | 1 | 1 | 1 | 1 |
| BYK-347 | 1 | 1 | 1 | 1 |
| PVP K-15 | 0.1 | 0.1 | 0.1 | 0.1 |
| SNOWTEX XS | 0.05 | 0.05 | 0.05 | 0.05 |
| PERMARINE UA-200 | 6 | 3 | 5 | 3 |
| Water | Remaining amount | Remaining amount | Remaining amount | Remaining amount |

In Table 2, the numerical value of each component denotes the content (% by mass) of the component in the corresponding ink, and "remaining amount" which is the amount of water denotes the remaining amount set such that the total amount of the composition reaches 100% by mass.

In Table 2, the details of the components listed below PG (1,2-propanediol) are the same as the details of the components of the white ink described above.

APD4000C and the like in Table 2 are pigment dispersion liquids, and the details thereof are as follows.

In Table 2, the amount of the pigment dispersion liquid denotes the amount of the solid content (total amount of the pigment and the pigment dispersing agent).
· APD4000C ... Projet Cyan APD4000 (manufactured by FUJIFILM Imaging Colorants Inc., cyan pigment dispersion liquid, pigment concentration ... 20% by mass)
· APD4000M ... Projet Magenta APD4000 (manufactured by FUJIFILM Imaging Colorants Inc., magenta pigment dispersion liquid, pigment concentration ... 20% by mass)
· APD1000R ... Projet Red APD1000 (manufactured by FUJIFILM Imaging Colorants Inc., red pigment dispersion liquid, pigment concentration ... 16% by mass)
· APD4000Y ... Projet Yellow APD4000 (manufactured by FUJIFILM Imaging Colorants Inc., yellow pigment dispersion liquid, pigment concentration ... 20% by mass)
· APD4000K ... Projet Black APD4000 (manufactured by FUJIFILM Imaging Colorants Inc., black pigment dispersion liquid, pigment concentration ... 15% by mass)

### <Image recording>

Image recording was performed using
the pretreatment liquid in any one of Examples 1 to 27 and Comparative Examples 1 to 5,
the white ink in Example 1, and
the colored inks (specifically, the cyan ink, the magenta ink, the yellow ink, and the black ink) shown in Table 2.

Specifically, each of the following image recording A to image recording D was performed to obtain a solid image.

In the following image recording A to image recording D, each of the conditions for applying the pretreatment liquid, the conditions for drying the applied pretreatment liquid, the conditions for applying the ink, and the conditions for drying the applied ink was set to the same as those in the image recording of Example 1.
Image recording A ... image recording performed in order of application of the pretreatment liquid, drying, application of the cyan ink, application of the white ink, and drying
Image recording B ... image recording performed in order of application of the pretreatment liquid, drying, application of the cyan ink, application of the magenta ink, application of the yellow ink, application of the black ink, application of the white ink, and drying
Image recording C ... image recording performed in order of application of the pretreatment liquid, drying, application of the cyan ink, drying, application of the white ink, and drying
Image recording D ... image recording performed in order of application of the pretreatment liquid, drying, application of the cyan ink, application of the magenta ink, application of the yellow ink, application of the black ink, drying, application of the white ink, and drying

The preparation of the laminate and the evaluation of the boiling resistance of the laminate were performed in the same manners as in Example 1 using each image recorded material obtained in the image recording A to the image recording D.

As a result, it was confirmed that in a case where the pretreatment liquids of Examples 1 to 27 were used, the boiling resistance of the laminate was excellent similarly to Examples 1 to 27 (that is, image recording performed with the single white ink) even in a case where any of the image recording A to the image recording D was performed.

The disclosure of JP2023-022852 filed on February 16, 2023 is incorporated herein by reference in its entirety.

All documents, patent applications, and technical standards described in the present specification are incorporated herein by reference to the same extent as in a case of being specifically and individually noted that individual documents, patent applications, and technical standards are incorporated by reference.

## Claims

1. A pretreatment liquid for an ink jet ink, comprising:
water;
an aggregating agent;
a nonionic urethane resin; and
a crosslinking agent.

2. The pretreatment liquid for an ink jet ink according to claim 1,
wherein the crosslinking agent includes a compound having at least one of a carbodiimide group or an oxazoline group.

3. The pretreatment liquid for an ink jet ink according to claim 1,
wherein a content of the crosslinking agent with respect to a total amount of the nonionic urethane resin is 2.0% by mass to 50% by mass.

4. The pretreatment liquid for an ink jet ink according to claim 1,
wherein a content of the crosslinking agent with respect to a total amount of the pretreatment liquid for an ink jet ink is 0.10% by mass to 5.00% by mass.

5. An ink set comprising:
the pretreatment liquid for an ink jet ink according to any one of claims 1 to 4; and
an ink jet ink containing water, a pigment, and a resin having a carboxy group.

6. The ink set according to claim 5,
wherein the resin having a carboxy group contained in the ink jet ink includes a urethane resin having a carboxy group.

7. The ink set according to claim 5,
wherein the ink jet ink is a white ink containing a white pigment.

8. An image recording method comprising:
a step of applying the pretreatment liquid for an ink jet ink according to any one of claims 1 to 4 onto an impermeable base material; and
a step of applying an ink jet ink containing water, a pigment, and a resin having a carboxy group onto a region of the impermeable base material onto which the pretreatment liquid for an ink jet ink is applied, by an ink jet method.

9. The image recording method according to claim 8,
wherein the resin having a carboxy group contained in the ink jet ink includes a urethane resin having a carboxy group.

10. The image recording method according to claim 8,
wherein the ink jet ink is a white ink containing a white pigment.

11. The image recording method according to claim 8
wherein an application amount of the crosslinking agent in the pretreatment liquid for an ink jet ink, which is applied onto the impermeable base material, is 1.0% by mass to 30% by mass with respect to an application amount of the resin having a carboxy group in the ink jet ink, which is applied onto the impermeable base material.

12. A method of producing a laminate, comprising:
a step of obtaining an image recorded material that includes the impermeable base material and an image disposed on the impermeable base material by the image recording method according to claim 8; and
a step of laminating a base material for lamination on a side of the image recorded material on which the image is disposed, to obtain a laminate.

13. An image recorded material comprising:
an impermeable base material; and
an image disposed on the impermeable base material,
wherein the image includes
a pretreatment layer disposed on the impermeable base material and containing an aggregating agent, a nonionic urethane resin, and a crosslinking agent, and
an ink layer disposed on the pretreatment layer and containing a pigment and a resin having a carboxy group.

14. A laminate comprising:
the image recorded material according to claim 13; and
a base material for lamination laminated on the image of the image recorded material.
